# EUROPEAN PATENT APPLICATION

(11) **EP 1 004 704 A1**
(43) Date of publication of application: **31.05.2000**
(21) Application number: 99909208.3
(22) Date of filing: 17.03.1999
(51) Int. Cl.: E01C 7/08, E01C 7/18, E01C 7/30

(54) **MIXTURE FOR FLEXIBLE PAVEMENT USABLE AT ORDINARY TEMPERATURE**

(30) Priority: 18.03.1998 JP 8821598; 18.03.1998 JP 8821798
(71) Applicant: Nichireki Co., Ltd., Chiyoda-ku, Tokyo 102-8222 (JP)
(72) Inventor: KURIHARA, Fumio, Hanyu-shi, Saitama 348-0011 (JP); SATOU, Mitsuhiro, Kitasaitama-gun, Saitama 349-1211 (JP); OKADA, Kiyoshi, Kitasaitama-gun, Saitama 349-1202 (JP); SAITOU, Makoto, Oyama-shi, Tochigi 323-0021 (JP); OUKI, Hidemi, Kita-ku, Tokyo 114-0003 (JP); SEKINE, Kunio, Kitakatsushika-gun, Saitama 340-0206 (JP); ITOU, Akira, Shimotsuga-gun, Tochigi 329-0413 (JP); MARUSHIMA, Takakazu, Shimotsuga-gun, Tochigi 329-0414 (JP); SUZUKI, Tooru, Utsunomiya-shi, Tochigi 320-0821 (JP)
(74) Representative: Daniels, Jeffrey Nicholas
(86) International application number: JP9901329
(87) International publication number: WO9947753

(57) **Abstract**

The present invention provides a method of using rejected herbaceous plant portions by mixing rejected herbaceous plant portions with a cold binder such as a thermosetting polymer or an asphalt emulsion and using the resultant mixture as a main constituent of an asphalt mixture for elastic pavement, and provides an elastic pavement structure having, as a surface layer or a part thereof, a layer built by the use of a cold asphalt mixture for elastic pavement comprising rejected herbaceous plant portions as a main component material and a thermosetting polymer or an asphalt emulsion serving as a cold binder, and a cold asphalt mixture for elastic pavement.

## Description

### BACKGROUND OF THE INVENTION

### Field of the Invention

The present invention relates to a cold asphalt mixture for an elastic pavement and an elastic pavement structure based thereon. More particularly, the invention relates to a cold asphalt mixture effectively utilizing rejected herbaceous plant portions such as cereal seed husks as a main material and an elastic pavement structure built by the use thereof.

### Description of the Related Art

The elastic pavement is now tentatively been employed, as a pavement giving an agreeable walking sensation or running sensation to pedestrians for ordinary sidewalks, walkways in parks and river reservations, promenades in playlands, frontage roads between buildings, station forecourts, and jogging courses. However, because of the use of rubber chips as a material imparting to the pavement structure, the elastic pavement is high in cost, poor in durability, low in capability to give appropriate permeability to the pavement structure, and leaves a mud puddle on the pavement surface after rainfall.

On the other hand, cereal seed husks typically represented by chaffs have conventionally been used as fillers for a pillar or a mat, a buffer material in packaging or transportation, or further in the form of leaf mold in mixture with soil, or as organic fertilizer in the form of incinerated ash through incineration. The consumption is however limited: it is far smaller than the total discharge of cereal seed husks believed to be over five million tons every year only within Japan. Remaining cereal seed husks in huge quantities are disposed of as wastes, but incineration in quantities is not desirable at all now that global warming caused by carbon dioxide gas is becoming a global issue. There is therefore an increasing demand for development of an appropriate method of disposal or some methods for effective utilization thereof. In addition, leaves, stems and roots of cereals not utilized and rejected, and rejected herbaceous plants other than cereals mowed or pulled out account for a huge amount, apart from the above. If these rejected materials can be appropriately disposed of or effectively utilized, this would be desirable for earth environments.

### SUMMARY OF THE INVENTION

In view of the aforementioned circumstances, the present invention has an object to provide a method which can solve the defects of the conventional elastic pavement stricture, high in cost, poor in durability and hard to impart an appropriate water permeability, and permits effective utilization of rejected herbaceous plant portions such as cereal seed husks which are discharged in quantities as rejects.

The present inventors carried out extensive studies by combining two quite different subjects, i.e., elimination of the defects involved in the conventional elastic pavement structure, on the one hand, and provision of a method for effective utilization of rejected herbaceous plant potions such as cereal seed husks discharged in large quantities, on the other hand, on the basis of their unique idea. As a result, they found the possibility of simultaneous resolution of the two subjects by combining rejected herbaceous plant portions such as cereal seed husks typically represented by chaffs with a cold binder such as a thermosetting polymer or an asphalt emulsion into an elastic pavement cold mixture, and thus completed the present invention.

More specifically, the present invention provides a method of using rejected herbaceous plant portions by mixing rejected herbaceous plant portions with a cold binder such as a thermosetting polymer or an asphalt emulsion and using the resultant mixture as a main constituent of an asphalt mixture for elastic pavement, and provides an elastic pavement structure having, as a surface layer or a part thereof, a layer built by the use of a cold asphalt mixture for elastic pavement comprising rejected herbaceous plant portions as a main component material and a thermosetting polymer or an asphalt emulsion serving as a cold binder, and a cold asphalt mixture for elastic pavement.

The term "main component material" as herein used is relative to auxiliary materials, accounting for most part of the mixture, and means consequently a material, properties of which are remarkably expressed in the mixture or in a layer built by the mixture. So far as the properties of a main component material are expressed in the mixture or the layer built by the mixture, there is no particular limitation on the blending ratio, and it is not always necessary that a main component material content is the largest in the mixture.

In addition to the rejected herbaceous plant portion serving as a main component material, a cold asphalt mixture for elastic pavement of the present invention may be added with one or more auxiliary materials selected from the group consisting of a coloring pigment, rubber, elastomer, sawdust, waste plastic materials, glass chips, wheat straw, corn chips, straw chips, hay, bean shell, leaves and roots of trees, chips of polyethylene containers, and chips for papermaking, or an aggregate. These auxiliary materials and aggregate are added as required, to make up with properties of the rejected herbaceous plant portions serving as the main component material, to provide variations, or to color. There is no particular limitation on the blending ration thereof so far as these materials do not impair the properties of the rejected herbaceous plant portion as a main component material. However, when using an asphalt emulsion described later as a binder, an aggregate should preferably be added.

The cold asphalt mixture for elastic pavement of the invention uses a binder applicable in cold such as a thermosetting polymer or an asphalt emulsion. It is not therefore necessary to heat the binder upon site execution, and the rejected herbaceous plant portion serving as a main component material is never damaged. Further, cold binder used in the present invention is free from production of carbon dioxide gas or the like which may be produced by heating, thus resulting in a mixture excellent also in terms of earth environments.

The cold asphalt mixture for elastic pavement of the invention which comprises rejected herbaceous plant portions and cold binder is usually used as a mixture for constructing a surface course or a part thereof on a subbase course. The course thus built has appropriate elasticity and water permeability at the same time, gives an agreeable walking feeling or running feeling to pedestrians, and causes penetration of rainfall without leaving water pools on the pavement surface. When constructing only a part of surface course by the use of a cold asphalt mixture for elastic pavement of the invention, a lower course should preferably be built by using a mixture for permeable pavement. By so doing, even when only a part of the surface course is constructed with the cold asphalt mixture for elastic pavement, it is possible to cause effective penetration of rainfall or the like to return the same into subgrade soil under the pavement. Therefore, irrespective of the site of execution, including not only an ordinary sideway, but also a walk way in a park or a river reservation, a promenade in a playland, a frontage road between buildings, a station forefront, and a jogging course, the asphalt mixture for elastic pavement of the invention exerts only a limited effect on the growth of trees or the distribution of ground-water, and is a very excellent pavement asphalt mixture. The cold asphalt mixture for elastic pavement of the invention, using rejected herbaceous plant portions such as cereal seed husks in large quantities, is optimum as a use of rejected herbaceous plant portions such as cereal seed husks and the like discharged in large quantities, and costs low since rejected herbaceous plant portions as waste are effectively utilized.

### Brief Description of the Drawings

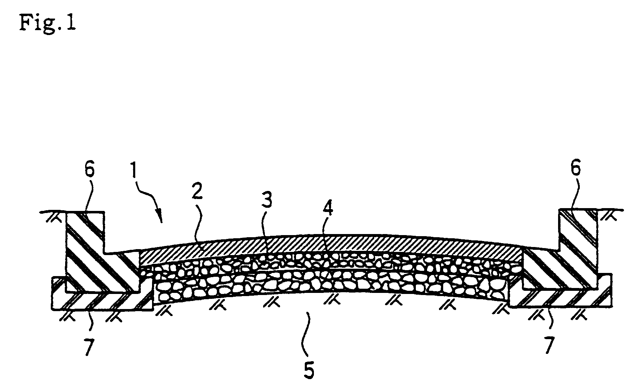

Fig. 1 illustrates an embodiment of the elastic pavement structure of the present invention.

### Description of the Preferred Embodiment

The term "rejected herbaceous plant portions" as used in the present invention means portions of herbaceous plants rejected without being used, including not only cereal seed husks and leaves, stems and roots of cereals rejected without being used, but also, all rejected herbaceous plant portions in general mowed or pulled out such as reed and Japanese pampas grass. From the point of view of a relatively uniform size, cereal seed husks are the most desirable ones. Cereal seed husks are husks of seed of cereals such as rice, wheat, millet, barnyard grass, beans, buckwheat and corn, typically represented by chaffs of rice. While chaffs are most suitable for use in the present invention because of an appropriate hardness, cereal seed husks applicable in the invention are not limited particularly to chaffs. In the present invention, a single kind of cereal seed husks may be used alone, or two or more kinds may also be used. When using rejected herbaceous plant portions other than cereal seed husks having non-uniform sizes, husks are previously divided and/or crushed in a biting mill or a crusher to a particle size of about 0.3 to 20 mm or preferably 5 to 1.2 mm. In the present invention, a single kind of rejected herbaceous plant portion may be used alone, or two or more kinds may of course be used. The aforementioned rejected herbaceous plant portions should preferably be used after drying. When using a blighted tree or ones mowed or pulled out and then left to dry, it is needless to mention that they can be used as they are without subjecting them to a special drying step. In general, a herbaceous plant is milder than a woody plant, and when used as a main component material of the cold asphalt mixture for elastic pavement, provides an advantage of more excellent elasticity effect as compared with a woody plant.

Thermosetting polymers applicable as cold binders in the present invention include, for example, acryl resin, aryl resin, epoxy resin, urea resin, phenol resin, furan resin, unsaturated polyester resin, melamine resin, and polyurethane resin, and among others, polyurethane resin is preferable.

Isocyanates and polyols usually in use are applicable for polyurethane. For example, applicable isocyanates include tolylenediisocyanate (TDI), diphenylmethane-diisocyanate (MDI), crude MDI, hexamethylene-diisocyanate (HMDI), xylylenediisocyanate (XDI), hydrogenation TDI, hydrogenation MDI, and methaxylylenediisocyanate, polymethylenepolyphenylisocyanate (PAI). Prepolymers containing terminal isocyanate group available from reactions with a plasticizer, a filler, a catalyst, a bridging agent, a foaming agent and the like may be used, apart from reactions with these isocyanates and polyols.

Applicable polyols include polyesterpolyol, polyetherpolyol, and polymerpolyol. Applicable polyesterpolyols include, for example, polyols and castor oils available from reactions of such dicarboxylic acids as adipic acid, phthalic acid, dimer linolenic acid and maleic acid with glycols such as ethylene, propylene, butylene and diethylene, glycerine, trimethylolpropane, diol such as pentaerythrital, and triol.

Applicable polyetherpolyols include, for example, propylene glycols glycerine, trimethylol propane and other polyols and polyamines added with propyleneoxide (PO), ethyleneoxide (EO), butyleneoxide, methyltrimethyleneoxide, or dimethytrimethyleneoxide.

Applicable polymerpolyols include, for example, polyols having two or more hydroxyl groups at molecular terminals or in molecules in polybutadiene, styrene-butadiene copolymer and butadiene-acrylnitrile copolymer, polyols of linear polymer ester of ethylene glycol and telephthalic acid, and acrylpolyol of an acrylic acid derivative.

In addition to the aforementioned isocyanates and polyols, it is of course possible to use usually applicable plasticizer, filler, catalyst, foaming agent, binding agent, dispersant and other assistants.

The consumption of thermosetting polymer in a cold asphalt mixture for elastic pavement of the present invention should preferably be within a range of 10 to 50 volume parts relative to 100 volume parts of rejected herbaceous plant portions in dry state. With a consumption of the thermosetting polymer of under 10 volume parts, the resultant mixture is poor in adhesiveness and bonding property between rejected herbaceous plant portions becomes also poor. Although this does not make it impossible to use the mixture, a satisfactory pavement structure may not be obtained. With a consumption of the thermosetting polymer of over 50 volume parts, on the other hand, only a low working ability of the resultant mixture is available, requiring only an increasing cost.

Asphalt emulsions applicable as a cold binder in the present invention include ones which are obtained by emulsifying in water natural asphalt such as lake asphalt, straight asphalt, blown asphalt, semi-blown asphalt, petroleum asphalt such as solvent deasphalting asphalt (for example, propane deasphalting asphalt), bituminous materials such as heavy oil, tar and pitch, artificial asphalt, and a mixture two or more thereof, by means of an appropriate emulsifier such as a colloid mill, a homogenizer or a homo-mixer, by the use of any of various surfactants or clay (e.g., bentonite), and further as required, adding an alkali, and acid, a salt, a dispersant or a protective colloid.

An artificial asphalt used in the present invention after being emulsified as an asphalt emulsion is a product, for example, obtained by blending a petroleum oil blend and a petroleum resin at a ratio of the petroleum oil blend to the petroleum resin of (10 to 60%): (90 to 40%) in weight. With a ratio of the petroleum oil blend of under 10 wt.%, the resultant artificial asphalt gives too lower penetration degree and is hence poor in working ability. With a ratio of the petroleum oil blend of over 60 wt.%, on the other hand, while the resulting artificial asphalt gives higher penetration degree, adhesion and viscosity become too lower to accept. The artificial asphalt resulting from preferable blending ratio is substantially colorless and, consequently, even when used with the rejected herbaceous plant portions serving as a main component material, a colored aggregate or a coloring pigment, the artificial asphalt never impairs the original color of these materials. The expression "being substantially colorless" as herein used means being colorless to an extent not impairing the color of the material to be mixed. It is not therefore necessary that the artificial asphalt is perfectly transparent it may be opaque, or may be slightly tinted with amber color. It suffices that the asphalt is substantially colorless at a stage of expression of a prescribed strength as a binder after progress of reaction or decomposition. Even when it has a white or other color as an artificial asphalt emulsion, it suffices to become substantially colorless in the stage of expression of a strength as a binding material after decomposition.

The petroleum oil blend used in the artificial asphalt in the present invention is known also as a process oil. It may be an aromatic oil having an aromatic carbon number accounting for more than 35% of the total carbon number, a naphthene oil having a naphthene carbon number accounting for 35 to 45% of the total carbon number, or a paraffin oil having a paraffin side-chain carbon number accounting for more than 50% of the total carbon number. In the present invention, one or more of these petroleum oil blends are appropriately used.

The petroleum resins used for the artificial asphalt in the present invention include an aliphatic (C5-based) petroleum resin mainly comprising a fraction of a boiling point within a range of from 20 to 60°C (C5-fraction), separated trough distillation of a naphtha decomposition product, an aromatic (C9-based) petroleum resin mainly comprising a fraction of a boiling point within a range of from 160 to 260°C (C9-fraction), separated as well trough distillation of a naphtha decomposition product, an aliphatic/aromatic copolymer (C5/C9-based) petroleum resin resulting from copolymerization of these C5-based and C9-based petroleum resins, and an aliphatic (DCPD-based) petroleum resin mainly comprising high-purity dicyclopentadiene separated through distillation mainly of a naphtha decomposition product. In the present invention, one or more in combination of the above are used.

Emulsifiers applicable for emulsifying various bituminous substances, the artificial asphalt, and mixtures of two or more thereof may be cationic, anionic or amphoteric. Cationic emulsifiers applicable in the present invention include aliphatic and alicylic monoamine, diamine, triamine, amideamine, polyaminoethylimidazoline, long-chain hydroxyalkyldiamine, and rosinamine having a long-chain alkyl group, these amines added with ethylene oxide, amine oxide, and water-soluble or water-dissoluble salt obtained by causing hydrochloric acid, sulfamine acid or acetic acid to act on these amine-based surfactants, and quaternazy ammonium salts of these amine-based surfactants. Together with these surfactants, a nonion surfactant such as polyoxyethylenealkylether, polyoxyethylenealkylarylether, or oxyethylene-oxyproplylene block copolymer may be simultaneously employed.

Anionic emulsifiers applicable in the present invention include higher-alcohol ester sulfate, alkylarylsulfonate, alkylbenzenesulfonate, α-olefin sulfonate, high-alcohol ethoxylate, high-alcohol ethoxylate-sulfate, soap, naphthalenesulfonate and formalin denatured product, alkali lignin sulfonate, alkali salt of casein, and polyacryslate.

Amphoteric emulsifiers applicable in the present invention include addition products of alkyleneoxide such as alkylphenol, mono-and polyhydric alcohol adds, aliphatic compounds, aliphatic amines, aliphatic amides and ethanol amines.

Applicable dispersants and protective colloids used for the asphalt emulsion include naphthalene soda sulfonate, casein, alginic acid, gelatin, carboxymethylcellulose, ethylcellulose, hydroxyethylcellulose, polyvinylalcohol, soda palyacrylate, lignin sulfonate and nitrohuminate.

In addition to the above-mentioned bituminous materials, artificial asphalt and the mixture of one or more thereof, one or more ingredients selected from the group consisting of natural rubber and various synthetic rubber materials may be added to an asphalt emulsion of the present invention. Applicable synthetic rubber materials include, for example, chloroprene rubber, styrene-isoprene copolymer rubber, polyisoprene rubber, polybutadiene rubber, styrene-butadiene block copolymer rubber, and styrene-butadiene-styrene copolymer rubber. Among others, use of chloroprene rubber or styrene isoprene copolymer rubber is preferable because of improvement of high-temperature and low-temperature properties. For a solid or latex type, a Mooney viscosity within a range of from 10 to 100 is preferable since a good result is available.

Various bituminous materials and artificial asphalt as well as the mixture of more than two kinds of them can be used as an asphalt emulsion in the present invention after having been modified by adding the following polymer in addition to the above-mentioned rubber materials and then emulsified and dispersed. Applicable polymers thus added include, for example, synthetic polymer resins such as ethylene/vinyl acetate copolymer, polyethylacrylate, polymethylacrylate, polyacrylic acid, and polyvinyl chloride, synthetic resins such as coumarone resin, carbolic acid resin, xylene resin, urea formalin resin and alkyd resin, and natural resins such as rosine and terpene resin.

The aforementioned rubber materials or polymers should preferably be added in an amount within a range of 5 to 20 wt.% in solid weight into an asphalt emulsion. With an amount of added rubber or polymer of under 5 wt.%, the effect of addition of rubber or polymer is slight. With an amount of added rubber or polymer of over 20 wt.%, on the other hand, an increased viscosity tends to lose a satisfactory executing ability.

For purposes of improving heat resistance, preventing deterioration caused by ultraviolet rays, achieving a higher working ability and improving adhesion, an ultraviolet ray absorber, various additives and a viscosity adjusting agent may be added to the asphalt emulsion.

The solid content in an asphalt emulsion used in the present invention should preferably be within a range of 50 to 80 wt.%. An asphalt emulsion with a solid content of under 50wt.% is not inapplicable, but is undesirable because it tends to give elastic pavement which has slightly less adhesiveness and visco-elasticity. An asphalt emulsion with a solid content of over 80 wt.%, not leading to impossibility to use, tends to give too much higher viscosity to maintain a good execution ability.

It is the usual practice to rely upon spontaneous decomposition for the decomposition of the asphalt emulsion. It may however be forcedly decomposed by using a decomposition accelerator.

The content of an asphalt emulsion serving as a cold binder in the cold asphalt mixture for elastic pavement of the present invention should preferably be within a range of 50 to 300 weight parts, or more preferably, of 70 to 200 weight parts as an asphalt solid content in the asphalt emulsion, relative to 100 weight parts of the rejected herbaceous plant portions in dry state. An asphalt solid content of under 50 weight pans, not inapplicable, may lead to adhesiveness too lower to obtain a satisfiable pavement structure. With an asphalt solid content of over 300 weight part, on the other hand, too much amount of asphalt may cause a fluidizing phenomenon after execution, and upon increase in road surface temperature in summer, may base a flush phenomenon.

In addition to the rejected herbaceous plant portions including cereal seed husks, an aggregate, and one or more auxiliary materials selected from the group consisting of a coloring pigment, rubber, elastomer, sawdust, waste plastic materials, glass chips, wheat straw, corn chips, straw chips, hay, bean shells, branches, leaves and roots of trees, chips of polyethylene containers, and chips for papermaking may be added to a cold asphalt mixture for elastic pavement of the present invention. These auxiliary materials are crushed or cut into an appropriate size and appropriately used as a coloring agent or an extending agent, or further, for the purpose of imparting to the mixture properties hardly available from rejected herbaceous plant portions, including cereal seed husks, alone.

Aggregate used in the present invention is the aggregate for pavement as set forth in the "Asphalt Pavement Handbook" published by the Japan Road Association and includes crushed stone, crushed gravel, gavel, and steel slag. An asphalt-covered aggregate coated with asphalt or asphalt emulsion and recycled aggregate can be used for these aggregates. Other applicable aggregate materials include granular materials similar to the above such as artificial baked aggregate, baked and foamed aggregate, artificial light-weight aggregate, ceramic particles, luksobite, synopal, aluminum particles, plastic particles, ceramics, emery, sewage gully incinerated ash and granular materials thereof.

As the aggregate used in a cold asphalt mixture for elastic pavement of the present invention, crushed stone #7 having a particle size within a range of 2.5 to 5 mm or an aggregate having an equivalent particle size from among the above-mentioned materials may be used as a coarse aggregate. As a fine aggregate, a material having a particle size of up to 2.5 mm, generally including river sand, land sand, pit sand, screenings, crushed stone dust, artificial aggregate, stone powder, incinerated ash, clay, talc fly ash, carbon black, rubber powder particles, cork powder particles, woody powder particles, resin powder particles, pulp, and silica sand can be used. One of these coarse or fine aggregates, or the mixture of more than two of them may be used.

Aggregates are effective for imparting wear resistance, appropriate strength and void ratio to a cold asphalt mixture for elastic pavement of the present invention. When a thermosetting polymer is used as a cold binder, the consumption of the aggregate should be preferably within a range of 0 to 12 volume parts, or more preferably, of 2.5 to 10 volume parts relative to 100 volume parts of rejected herbaceous plant portions. A consumption of aggregate of over 12 volume parts is not desirable because it leads to a lower water permeability, although durability is improved. When an asphalt emulsion is used as a cold binder, on the other hand, the consumption of aggregate should be preferably within a range of 10 to 120 volume pans, or more preferably, of 25 to 100 volume parts relative to 100 volume parts of rejected herbaceous plant portions. A consumption of aggregate of under 10 volume parts causes durability problems in the resultant pavement structure, although the elasticity of the resultant pavement structure increases. With an aggregate consumption of over 120 volume parts, on the other hand, water permeability becomes poorer, although durability is improved.

Usually, fine aggregates are used in a cold asphalt mixture for elastic pavement of the present invention. However, a part of the fine aggregates may be replaced by coarse aggregates. The ratio of the coarse aggregates to the fine aggregates in the whole aggregate should preferably be within a range of (coarse aggregates/fine aggregates) = (1/1 to 1/5) in weight. If high-quality coarse aggregates are unavailable, only the fine aggregate may be used. When using aggregate having continuous particle sizes within a range of up to 5 mm, it is not necessary to particularly mix the coarse aggregate and the fine aggregate, and it suffices of coarse to use only that aggregate.

When using an asphalt emulsion as a cold binder, it is desirable to previously coat the aggregate with an asphalt emulsion or a heated asphalt. When performing coating, the consumption of an asphalt emulsion or a heated asphalt should preferably be within a range of 0.5 to 2.0 weight parts as solid content relative to 100 weight parts of aggregate.

When an asphalt emulsion is used as a cold binder, a hydraulic inorganic material may be added as required to a cold asphalt mixture for elastic pavement of the present invention. Applicable hydraulic inorganic materials include cement, anhydrite, semi-anhydrite and powdery slag.

Applicable kinds of cement include ordinary portland cement, high-early-strength portland cement, ultra high-early-strength cement, moderate heat portland cement, white portland cement, blast furnace cement, silica cement, alumina cement, expansive cement, blast furnace colloid cement, colloid cement, ultra rapid hardening cement, white cement, fly ash cement, sulfate resisting cement, and jet cement. One of these hydraulic inorganic materials or the mixture of two or more of them may be used. It is also possible to simultaneously use water, or known admixture materials for cement such as a shrinkage compensated materials, an accelerator, a hardening retarding material, a dispersant, an air-entraining agent, a viscosity improving agent, a water reducing agent, and a filler.

Hydraulic inorganic materials is usually used within a range of 0 to 70 weight parts relative to 100 weight parts of an asphalt emulsion. If hydraulic inorganic materials are used in an amount of over 70 weight parts, the resultant cold asphalt mixture may reveal too early hardening property to maintain proper working ability and, in addition, the resultant elastic pavement becomes excessively hard.

Coloring pigments used in the cold asphalt mixture for elastic pavement of the present invention include the following inorganic pigments:
White: titanium dioxide, zinc oxide, white lead
Black: iron black, graphite, carbon black
Red: cadmium red
Orange: molybdenum orange
Yellow: ferric hydroxide, iron oxide yellow, chrome yellow
Green: chromium oxide, chrome green
Blue: ultramarine, Prussian blue, cobalt blue
Purple: manganese violet
   As organic pigments:
Red: watching red, quinacridon red
Orange: permanent orange
Yellow: Fast yellow
Green: Phthalocyanine Green
Blue: Phthalocyanine blue
Purple: Dioxadine violet

These coloring pigments are used singly, or in combination of two or more of them. When using a thermosetting polymer as a cold binder, the consumption of pigments is usually within a range of 0 to 8 weight parts relative to 100 weight parts of a thermosetting polymer. When an asphalt emulsion is used as a cold binder, on the other hand, the consumption of coloring pigments is usually within a range of 0 to 50 weight parts relative to 100 weight parts of the solid content in the asphalt emulsion. Use of the coloring pigment in an amount over 8 weight parts or 50 weight parts gives almost no difference in effects, resulting in uneconomical operations.

The resultant elastic pavement structure constructed by the present invention can be colored with color aggregate or light-colored aggregate spread over the surface of the pavement structure, or with a coloring paint or the like spread or coated onto the surface of the pavement structure.

Rubber or elastomer materials applicable to a cold asphalt mixture for elastic pavement of the present invention as an auxiliary material include, for example, natural rubber, styrene-butadiene rubber, styrene-isoprene rubber, isoprene-rubber, butadiene rubber, chloreprene rubber, nitrile rubber, acryl rubber, butyl rubber, butyl halide rubber, chlorsulfonated polyethylene, chlorinated polyethylene, ethylenepropylene rubber, EPT rubber, alphine rubber, styrene-butadiene block copolymer rubber, styrene isoprene block copolymer rubber, ethylene-vinyl acetate copolymer, ethylene acrylate copolymer, ethylene-ethylacrylate copolymer (EEA), polyethylene, polyvinyl chloride, polyvinyl acetate, vinyl chloride-vinyl acetate copolymer, and vinyl acetate-acrylate copolymer. These rubber and elastomer materials may be rejected or recycled ones, and the use of a waste tire of automobile is particularly preferable. These rubber and elastomer may be tinted with a color.

These rubber or elastomer materials should preferably be used in a granular form, i.e. in a spherical or polygonal shape of size of about 1 to 5 mm, or in a form cut into small pieces.

The amount of auxiliary materials, other than coloring pigments, such as rubber, elastomer, sawdust, plastic wastes materials, glass chips, wheat straw, corn chips, straw chips, hay, bean shells, branches, leaves and roots of trees, chips of polyethylene containers, and chips for papermaking, is within a range of 0 to 100% in volumn, or more preferably, of 0 to 20% in volume, relative to rejected herbaceous plant portions serving as a main component material.

A cold asphalt mixture for elastic pavement of the present invention is manufactured charging rejected herbaceous plant portions such as cereal seed husks, together with aggregate, a hydraulic inorganic material and auxiliary materials as required in prescribed amounts into a mixer such as a pug mill mixer, a pan-type mixer, or a tilting type mixer, and after confirming the mixture is in a uniformly mixed state, charging a cold binder in a prescribed amount for further mixing and stirring. A cold asphalt mixture for elastic pavement of the invention is available upon completion of sufficient mixing and stirring.

An embodiment of the elastic pavement structure of the present invention will now be described with reference to the drawing. It is needless to mention that the elastic pavement structure of the invention is not limited to this embodiment.

Fig. 1 is a sectional view illustrating an embodiment of the case of building the elastic pavement structure of the invention in a sideway on which vehicles are prohibited to run, which is a frontage road located between buildings. In Fig. 1, 1 represents an elastic pavement structure of the present invention, 2, a course built by using a cold asphalt mixture for elastic pavement of the present invention, 3, a water permeable course, 4, a subbase course, 5, a subgrade soil, 6, L-shaped groove, and 7, sub-slab concrete.

Construction of an elastic pavement structure 1 of the present invention can be accomplished, for example, as follows. First, unevenness of the subgrade soil 5 is corrected by means of a small bulldozer, and after sufficient rolling compaction with a vibrating roller, a prime coat is applied onto exposed surface of the subgrade soil 5 and the sub-slab concrete 7. While prime coating is preferable, it may be omitted under some conditions. As the prime coat, for example, CPE-3 (made by Nichireki Co., Ltd.), and asphalt emulsion, may be used. Spraying of the prime coat is effected by means of an engine sprayer by uniformly spraying a quantity of about 1.8 l/m². After spraying the prime coat, crusher-run is placed, levelled and sufficiently compacted with a vibrating roller to build a subbase course 4. The material for building the subbase course 4 is not limited to crusher-run, but any material commonly used as a subbase constructing material is applicable. Applicable materials include mechanical stabilization crushed stone, mechanical stabilization slag, asphalt penetration macadam, crusher-run, crusher-run gravel, and sand. The thickness of the subbase course 4, depending upon the hardness of the subgrade soil 5 and the degree of compaction, is usually within a range of 5 to 15 cm, or preferably, of 7 to 12 cm. When the subgrade soil 5 is firm and solid, it is not necessary to build a subbase course 4.

Then, a prime coat is applied onto exposed surfaces of the subbase course 4, the sub-slab concrete 7 and the L-shaped groove 6. The prime coat as described above may be used in a quantity of the same order. The prime coat may sometimes be omitted. After spraying the prime coat, a water-permeable course 3 is placed as a part of the surface course. The material for building the water permeable course 3 may be any that imparts permeability to the course to be built. Usually, use of a cold or hotmixing-type open-graded asphalt mixture used as a mixture for permeable pavement is preferable. Or, an open-graded cement mixture may also be used. Apart from the above, an aggregate prepared from waste materials may be levelled to serve as a water-permeable course 3. The water-permeable course 3 usually has a thickness within a range of 1 to 4 cm. When the course 2 built by the use of a cold asphalt mixture for elastic pavement of the present invention has a sufficient durability, it is not always necessary to provide a water-permeable course 3.

Then, a tack coat is applied onto the exposed surfaces of the water-permeable course 3 and the L-shaped groove 6. For example, CATIOSOL GM (made by Nichireki Co., Ltd.), an asphalt emulsion with rubber, may be used as the tack coat. A tack coat should preferably be provided, but may be omitted. The amount of sprayed tack coat is, for example, about 1.2 litres/m². After spraying the tack coat, a cold asphalt mixture for elastic pavement of the present invention is brought into the site, leveled by means of a rake and a shovel, and finally surface-finished by using a trowel or the like so as to eliminate any irregularities. The course 2 built by the use of a cold asphalt mixture for elastic pavement of the present invention usually has a thickness within a range of 3 to 5 cm, when it is built as a surface course as a whole, and a thickness within a range of 1 to 2 cm when it is constructed as a part of the surface course.

The present invention will now be described further in detail by referring of experiments and examples.

### [Experiment 1]

### (Determination of the amount of blended thermosetting polymer)

Cold asphalt mixtures for elastic pavement were manufactured with various volume ratios of the thermosetting polymer to the cereal seed husks serving as rejected herbaceous plant portions, and tested for mixing ability, working ability, and state of mixture. Chaffs produced in Kitakawabe-machi, Kita-Saitama-gun, Saitama-ken (volume per gram in dry state: 8.33 cm³) were employed as cereal seed husks, and polyurethane resin (COLORPHART DA: made by Nichireki Co., Ltd.) was used as a thermosetting polymer. The mixing ability was evaluated in three levels of "Good", "Fair" and "Poor" in terms of easiness of mixing of chaffs and the thermosetting polymer upon mixing. The working ability was evaluated also in three levels of "Good", "Fair" and "Poor" in terms of possibility to evenly level the mixture upon placing. The state of the mixture was evaluated in three levels: "Good" for sufficiently soft one, "Fair" for one slightly poorer, and "Poor" for one poor in softness by grasping the mixture on the palm and/or pressing the mixture with the sole of wearing shoes. The results are shown in Table 1.

**Table 1**

| Test item | Amount of blended thermosetting polymer (volume parts of thermosetting polymer to 100 volume parts of cereal seed husks) | | | | | |
|---|---|---|---|---|---|---|
| | 5 | 15 | 25 | 35 | 45 | 55 |
| Mixing ability | Poor | Fair | Good | Good | Fair | Poor |
| Working ability | Poor | Fair | Good | Good | Fair | Poor |
| State of mixture | Poor | Fair | Good | Good | Fair | Poor |

As is clear from the results shown in Table 1, results were "Poor" in mixing ability, working ability and state of mixture in the case where the amount of thermosetting polymer was under 5 volume parts relative to 100 volume parts of cereal and husks, and in the case where that amount was 55 volume parts or more, thus suggesting the volume ratio of the thermosetting polymer relative to the cereal seed husks should preferably be within a range of 10 to 50 volume parts.

### [Experiment 2]

### (Determination of the amount of blended fine aggregates)

Mixtures were prepared with various volume parts of the blended fine aggregates relative to 100 volume parts of the cereal seed husks for each of three kinds of blending ratio of thermosetting polymer relative to 100 volume parts of the cereal seed husks: 15 volume parts, 25 volume parts and 35 volume parts, to test mixing ability, working ability, permeability time by simple test, intrusion volume, GB resistance factor, SB resistance factor, abrasion weight, and state of mixture. Mixing ability, working ability and state of mixture were evaluated in the same manner as in Experiment 1. The same materials as in Experiment 1 were used regarding the cereal seed husks and the thermosetting polymer, and river sand produced in the Kinugawa River, Tochigi-ken (volume per gram in dry state: 0.67 cm³) was used as fine aggregate. The test methods are as follows.

### (Simplified permeability time test)

The mixture is placed in a sample preparing mold for Marshall test (a cylinder having a diameter of 104.8 mm and a height of 88.9 mm), and only one side is compacted five times with a rammer to prepare a sample having a height of 3 cm by aligning a bottom with a bottom of the mold. The mold as containing the sample was immersed into a water tank which was then promptly lifted up, and the time up to complete elimination of water staying on the top of the sample in the mold was measured and the result was recorded as the permeability time by simple test.

### (Intrusion volume test)

A sample prepared in the same manner as in the simplified permeability time test was taken out from the mold, and placed on a concrete slab. A plunger was pressed against the center of the sample, and an intrusion volume upon application of a load was measured. An intruding head having a diameter of 25 mm was used at the tip of the plunger, with a load of 20 kgf and a measuring time of 30 seconds.

### [GB resistance factor test, SB resistance factor test]

These tests were carried out in conformity to the elasticity test methods as set forth in the "Pavement Test Method Handbook Supplement (Provisional Test Methods)", published by the Japan Road Association, October 1996, p.34-38.

### (Abrasion test)

A WTAT (Wet Track Abrasion Test) was carried out in conformity to ASTM D3910, however with an abrasion time of 90 seconds.

The results are shown in Tables 2 to 4.

**Table 2**

| Thermosetting polymer: 15 volume parts | Amount of blended fine aggregate (volume parts of fine aggregate to 100 volume parts of cereal seed husks) | | | | |
|---|---|---|---|---|---|
| Test item | 1 | 4 | 7 | 10 | 13 |
| Mixing ability | Good | Good | Good | Good | Poor |
| Working ability | Fair | Good | Good | Good | Poor |
| Permeability time by simple test (sec) | 6 | 23 | 51 | 69 | 98 |
| Intrusion volume (mm) | 5 | 3 | 1 | 0 | 0 |
| GB resistance factor | 19 | 25 | 31 | 37 | 46 |
| SB resistance factor | 10 | 13 | 19 | 28 | 32 |
| Abrasion weight (g/m²) | 121 | 88 | 70 | 39 | 8 |
| State of mixture | Fair | Good | Fair | Fair | Poor |

| | | | | | |
|---|---|---|---|---|---|
| (Note 1) Test aging days: 14 days | | | | | |

**Table 3**

| Thermosetting polymer:25 volume parts | Amount of blended fine aggregate (volume parts of fine aggregate to 100 volume parts of cereal seed husks) | | | | |
|---|---|---|---|---|---|
| Test item | 1 | 4 | 7 | 10 | 13 |
| Mixing ability | Good | Good | Good | Fair | Poor |
| Working ability | Good | Good | Good | Fair | Poor |
| Permeability time by simple test (sec) | 19 | 47 | 70 | 91 | 127 |
| Intrusion volume (mm) | 3 | 2 | 1 | 0 | 0 |
| GB resistance factor | 21 | 28 | 34 | 42 | 49 |
| SB resistance factor | 11 | 15 | 23 | 27 | 36 |
| Abrasion weight (g/m²) | 84 | 68 | 42 | 20 | 0 |
| State of mixture | Fair | Good | Good | Fair | Poor |

| | | | | | |
|---|---|---|---|---|---|
| (Note 1) Test aging days: 14 days | | | | | |

**Table 4**

| Thermosetting polymer:35 volume parts | Amount of blended fine aggregate (volume parts of fine aggregate to 100 volume parts of cereal seed husks) | | | | |
|---|---|---|---|---|---|
| Test item | 1 | 4 | 7 | 10 | 13 |
| Mixing ability | Good | Good | Fair | Fair | Poor |
| Working ability | Good | Fair | Fair | Fair | Poor |
| Permeability time by simple test (sec) | 32 | 58 | 86 | 125 | 151 |
| Intrusion volume (mm) | 1 | 1 | 0 | 0 | 0 |
| GB resistance factor | 25 | 31 | 29 | 40 | 53 |
| SB resistance factor | 16 | 22 | 27 | 27 | 24 |
| Abrasion weight (g/m²) | 66 | 41 | 28 | 4 | 0 |
| State of mixture | Good | Good | Fair | Fair | Poor |

| | | | | | |
|---|---|---|---|---|---|
| (Note 1) Test aging days: 14 days | | | | | |

As is clear from the results shown in Tables 2 to 4, according as the amount of blended fine aggregate increases, the water-permeability represented by the permeability time by simple test and elasticity represented by the intrusion volume gradually decrease, but the abrasion weight is reduced and the abrasion resistance is improved. However, irrespective of the amount of blended thermosetting polymer, mixing ability, working ability and state of mixture become poorer when the amount of fine aggregate reaches 13 volume parts, suggesting that the amount of fine aggregate should be 12 volume parts at most relative to 100 volume parts of cereal seed husks.

### [Experiment 3]

### (Effect of difference in thermosetting polymer)

Three kinds of thermosetting polymer including polyurethane resin used in Experiment 1, epoxy resin (COLORPHART TO: made by Nichireki Co., Ltd.), and acryl resin (COALCUT R-2: made by Nichireki co., Ltd.) were used, and cold asphalt mixtures for elastic pavement were prepared by blending 25 volume parts thermosetting polymer and 4 volume parts fine aggregate relative to 100 volume parts of cereal seed husks. The cereal seed husks and the fine aggregate were the same as in Experiment 2. Rubber particles (waste tire rubber particles: EPDM rubber chips, having a size of 5 to 2.5 mm, volume per gram in dry state: 1.72 cm³) were added at a ratio of 15 volume parts relative to 100 volume parts of cereal seed husks to a part of the cold asphalt mixture for elastic pavement. Mixing ability, working ability, permeability time by simple test, intrusion volume, GB resistance factor, SG resistance factor, loss weight of CANTABRO test and state of mixture were tested on the resultant cold asphalt mixtures for elastic pavement. Mixing ability, working ability and state of mixture were evaluated in the same manner as in Experiment 1. The CANTABRO test was carried out in conformity to the test method as set forth in the "Permeable Pavement Technical Guidelines (Draft)" published by the Publishing Division, Maruzen Co., Ltd., November 15, 1996, p. 85-91. The results are shown in Table5. For reference, the results of similar tests carried out on an ordinary dense-graded heated asphalt mixture are also shown in Table 5. Blending of the dense-graded heated asphalt mixture used as a reference is shown in Table 6.

**Table 5**

| Kind of thermosetting polymer | | Polyurethane resin | | Epoxy resin | | Acrylic resin | | Refer ence |
|---|---|---|---|---|---|---|---|---|
| Presence of rubber particles | | Absent | Present | Absent | Present | Absent | Present | Absent |
| Test item | Mixing ability | Good | Good | Good | Good | Good | Good | Good |
| | Working ability | Good | Good | Good | Good | Good | Good | Good |
| | Permeability time by simple test (sec) | 47 | 48 | 64 | 61 | 58 | 58 | (Note 2) |
| | Intrusion volume (mm) | 2 | 3 | 1 | 1 | 0 | 1 | 0 |
| | GB resistance factor | 28 | 27 | 46 | 37 | 54 | 49 | 68 |
| | SB resistance factor | 15 | 11 | 24 | 20 | 33 | 35 | 10 |
| | Loss weight of CANTABRO test (%) | 5 | 4 | 10 | 14 | 14 | 17 | 4 |
| | State of mixture | Good | Good | Fair | Good | Fair | Good | Good |

| | | | | | | | | |
|---|---|---|---|---|---|---|---|---|
| (Note 1) Test aging days: 14 days | | | | | | | | |
| (Note 2) Water was not eliminated within the measuring time, thus making it impossible to obtain a result of measurement. | | | | | | | | |

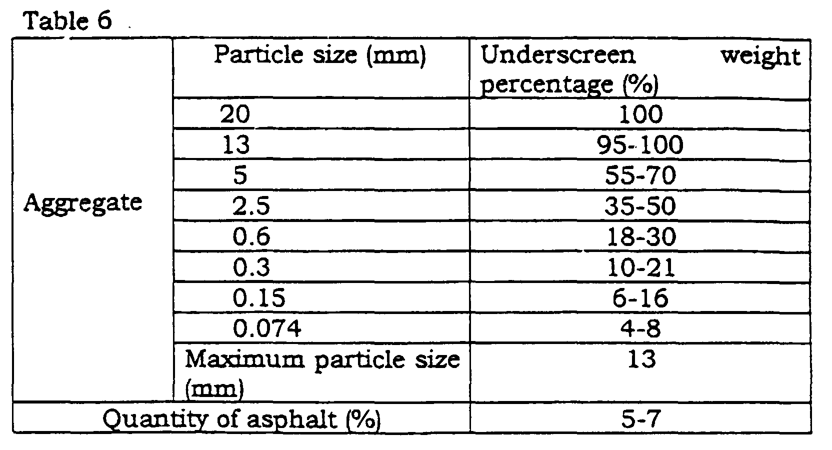

As is clear from the results shown in Table 5, among the three kinds of thermosetting polymers, polyurethane resin was more excellent than any other resins in all points including water-permeability represented by the permeability time by simple test, elasticity represented by the intrusion volume test, and abrasion resistance represented by loss weight of CANTABRO test. Addition of rubber chips tends to lead to a lower GB resistance factor, suggesting that this results in an increase in elasticity as a pavement structure.

### [Experiment 4]

### (Replacement of fine aggregate by coarse aggregate)

Cold asphalt mixtures for elastic pavement were prepared by blending 25 volume parts of thermosetting polymer and 4 volume parts of fine aggregate, relative to 100 volume parts of cereal seed husks, respectively, and replacing a part of the 4 volume parts of fine aggregate by coarse aggregate in various amounts. The cereal seed husks, the thermosetting polymer and the fine aggregate were the same as those used in Experiment 2. As the coarse aggregate, #7 crushed stone produced in Kuzuu, Tochigi-ken (volume per gram in dry state: 0.64 cm³) was used. The resultant cold asphalt mixtures for elastic pavement were tested for mixing ability, working ability permeability time by simple test, intrusion volume, GB resistance factor, SB resistance factor, loss weight of CANTABRO test, and state of mixture. The results are shown in Table 7. Mixing ability and working ability were evaluated in the same manner as in Experiment 1. In the evaluation of the state of mixture, another level "Excellent" was added above "Good".

**Table 7**

| Test item | Weight ratio of coarse aggregate to fine aggregate (coarse aggregate/fine aggregate) | | | | | |
|---|---|---|---|---|---|---|
| | 0/40 | 5/35 | 10/30 | 15/25 | 20/20 | 25/15 |
| Mixing ability | Good | Good | Good | Good | Good | Poor |
| Working ability | Good | Good | Good | Good | Good | Poor |
| Permeability time by simple test (sec) | 47 | 41 | 40 | 30 | 23 | 21 |
| Intrusion volume (mm) | 2 | 1 | 1 | 0 | 0 | 0 |
| GB resistance factor | 28 | 29 | 26 | 26 | 21 | 19 |
| SB resistance factor | 15 | 13 | 14 | 14 | 11 | 12 |
| Loss weight of CANTABRO test (%) | 5 | 6 | 6 | 7 | 6 | 8 |
| State of mixture | Good | Good | Excel lent | Excel lent | Good | Poor |

| | | | | | | |
|---|---|---|---|---|---|---|
| (Note 1) Test aging days: 14 days | | | | | | |

As is clear from the results shown in Table 7, replacement of a part of the fine aggregate by the coarse aggregate leads to a gradual increase in water-permeability. When the amount of coarse aggregate exceeds the amount of fine aggregate, however, both mixing ability and working ability become poorer, suggesting that the value of the ratio of coarse aggregate/fine aggregate should be of 1/1 or lower at the largest. A value of ratio of coarse aggregate/fine aggregate of 1/7 leads to a "Good" state of mixture, and a ratio 1/3 results in an "Excellent" state of mixture. It is therefore known that the boundary of the state of mixture transferring from "Good" to "Excellent" exists in the ratio between 1/7 and 1/3. From the results as shown in Table 7, therefore, it is concluded that the ratio of the coarse aggregate to the fine aggregate should preferably be within a range of (coarse aggregate/fine aggregate) = (1/1 to 1/5).

### [Experiment 5]

### (Determination of the amount of blended asphalt emulsion)

Cold asphalt mixtures for elastic pavement were prepared by fixing the volume ration of aggregate to the cereal seed husks at (fine aggregate/cereal seed husks) = 40/100, adding hydraulic inorganic materials so as to always achieve a weight ratio to the asphalt emulsion of 35 wt.%, and changing the weight ratio of solid content in the asphalt emulsion to the cereal seed husks to various levels. Mixing ability, working ability, permeability time by simple test, intrusion volume, GB resistance factor, SB resistance factor and abrasion weight were tested on these mixtures. The materials used are as follows:
- Cereal seed husks:: Chaffs (produced in Kitakawabe-machi, Kita-Saitama-gun, Saitama-ken) Volume per gram in dry state: 8.33 cm³
- Asphalt emulsion:: High-concentration modified asphalt emulsion (made by Nichireki Co., Ltd.) solid content: 70%
- Aggregate:: Fine aggregate (river sand produced in the Kinugawa River, Tochigi-ken), Volume per gram in dry state: 0.67 cm³
- Hydraulic inorganic material:: Ordinary portland Cement (made by Chichibu Onoda Cement Co., Ltd.)

Mixing ability was evaluated in three levels of "Good", "Fair" and "Poor" in terms of easiness of mixing the chaffs, the aggregate, the hydraulic inorganic materials and the asphalt emulsion upon mixing. Working ability was evaluated in three levels of "Good", "Fair" and "Poor" in terms of the possibility to uniformly level upon placing. Permeability time by simple test, intrusion volume, GB resistance factor, SB resistance factor and abrasion weight were tested in the same manner as in Experiment 2.

The results of theses tests are shown in Table 8.

**Table 8**

| Test item | Amount of blended asphalt emulsion (weight parts of asphalt solid fraction to 100 weight parts of cereal seed husks) | | | | | | |
|---|---|---|---|---|---|---|---|
| | 25 | 50 | 75 | 150 | 200 | 250 | 300 |
| Mixing ability | Poor | Good | Good | Good | Good | Fair | Fair |
| Working ability | Poor | Good | Good | Good | Good | Fair | Fair |
| Permeability time by simple test (sec) | 10 | 11 | 12 | 13 | 13 | 14 | 15 |
| Intrusion volume (mm) | 9 | 8 | 8 | 8 | 7 | 6 | 6 |
| GB resistance factor | 12 | 15 | 17 | 23 | 23 | 24 | 25 |
| SB resistance factor | 6 | 6 | 6 | 6 | 6 | 7 | 8 |
| Abrasion weight (g/m²) | 1190 | 930 | 860 | 650 | 520 | 470 | 450 |

| | | | | | | | |
|---|---|---|---|---|---|---|---|
| (Note 1) Volume ratio of fine aggregate to cereal seed husks: (Fine aggregate/cereal seed husks) = 40/100 | | | | | | | |
| (Note 2) Weight ratio of hydraulic inorganic material to asphalt emulsion: (hydraulic inorganic material/asphalt emulsion) = 35/100 | | | | | | | |
| (Note 3) Test aging days: 14 days | | | | | | | |

As is clear from the results as shown in Table 8, it is known that an asphalt solid content in the asphalt emulsion within a range of 50 to 300 weight parts relative to 100 weight parts of cereal seed husks gives a mixture good mixing ability and good working ability, as well as satisfying elasticity represented by the intrusion volume and the GB resistance factor, and good abrasion resistance.

### [Experiment 6]

### (Determination of the amount of blended aggregate)

Cold asphalt mixtures for elastic pavement were prepared by fixing the weight ratio of the asphalt solid content in the asphalt emulsion to the cereal seed husks to (solid content in asphalt emulsion/cereal seed husks) = 200/100, adding hydraulic inorganic materials so as to always achieve a weight ratio of 35 wt.% to the asphalt emulsion, and changing the volume ratio of aggregate to cereal seed husks to various levels. Mixing ability, working ability, permeability time by simple test, intrusion volume, GB resistance factor, SB resistance factor, and abrasion weight were tested on these mixtures. The materials used and the test methods were the same as in Experiment 5. The results are shown in Table 9.

**Table 9**

| Test item | Amount of blended fine aggregate (volume parts of fine aggregate to 100 volume parts of cereal seed husks) | | | | | | | |
|---|---|---|---|---|---|---|---|---|
| | 0 | 5 | 10 | 15 | 40 | 80 | 120 | 140 |
| Mixing ability | Poor | Poor | Good | Good | Good | Good | Good | Poor |
| Working ability | Poor | Poor | Fair | Good | Good | Good | Fair | Poor |
| Permeability time by simple test (sec) | 4 | 4 | 6 | 6 | 11 | 37 | 89 | 119 |
| Intrusion volume (mm) | 19 | 19 | 19 | 18 | 8 | 4 | 2 | 2 |
| GB resistance factor | 8 | 8 | 9 | 9 | 15 | 26 | 38 | 51 |
| SB resistance factor | 8 | 7 | 8 | 9 | 6 | 9 | 10 | 12 |
| Abrasion weight (g/m²) | 3010 | 2840 | 2710 | 2584 | 520 | 310 | 170 | 24 |

| | | | | | | | | |
|---|---|---|---|---|---|---|---|---|
| (Note 1) Weight ratio of solid fraction in the asphalt emulsion: (asphalt solid fraction/cereal seed husks) = 200/100 | | | | | | | | |
| (Note 2) Weight ratio of hydraulic inorganic material to asphalt emulsion): (hydraulic inorganic material/asphalt emulsion) = 35/100 | | | | | | | | |
| (Note 3) Test aging days: 14 days | | | | | | | | |

As is clear from the results shown in Table 9, the amount of fine aggregate relative to 100 volume parts of cereal seed husks within a range of 10 to 120 volume parts gives a mixture good mixing ability and good working ability, as well as satisfying elasticity represented by the intrusion volume and the GB resistance factor, and good abrasion resistance.

### [Experiment 7]

### (Amount of blended hydraulic inorganic materials)

Cold asphalt mixtures for elastic pavement were prepared by fixing the weight ratio of an asphalt solid content in the asphalt emulsion to the cereal seed husks to (solid content in asphalt emulsion/cereal seed husks) = 200/100, further fixing the volume ratio of aggregate to the cereal seed husks to (fine aggregate/cereal seed husks) = 25/100, and changing the weight ratio of the hydraulic inorganic materials to the asphalt emulsion to various levels. Mixing ability, working ability, permeability time by simple test, intrusion volume GB resistance factor, SB resistance factor, and abrasion weight were tested on these mixtures. The materials and the test methods were the same as in Experiment 5. The results are shown in Table 10.

**Table 10**

| Test item | Amount of blended hydraulic inorganic material (weight parts to 100 weight parts of asphalt emulsion) | | | | | |
|---|---|---|---|---|---|---|
| | 0 | 10 | 35 | 40 | 70 | 80 |
| Mixing ability | Good | Good | Good | Good | Good | Fair |
| Working ability | Good | Good | Good | Good | Good | Poor |
| Permeability time by simple test (sec) | 3 | 5 | 9 | 10 | 29 | 46 |
| Intrusion volume (mm) | 18 | 18 | 15 | 12 | 12 | 8 |
| GB resistance factor | 2 | 8 | 10 | 13 | 29 | 36 |
| SB resistance factor | 7 | 6 | 7 | 7 | 8 | 8 |
| Abrasion weight (g/m²) | 2910 | 2010 | 1093 | 820 | 510 | 390 |

| | | | | | | |
|---|---|---|---|---|---|---|
| (Note 1) Volume ratio of fine aggregate to cereal seed husks: (fine aggregate/cereal seed husks) = 25/100 | | | | | | |
| (Note 2) Weight ratio of solid fraction in asphalt emulsion to cereal seed husks (asphalt solid fraction/cereal seed husks) = 200/100 | | | | | | |
| (Note 3) Test aging days: 14 days | | | | | | |

As is clear from the results shown in Table 10, while abrasion resistance is improved according as the amount of the blended hydraulic inorganic material increases, water-permeability and elasticity tend to decrease, and the amount of blended hydraulic inorganic materials should preferably be of 70 weight parts or lower relative to the asphalt emulsion.

### [Experiment 8]

### (Replacement of fine aggregate by coarse aggregate)

Cold asphalt mixtures for elastic pavement were prepared by fixing the weight ratio of an asphalt solid content in the asphalt emulsion to the cereal seed husks to (solid content in asphalt emulsion/cereal seed husks) = 200/100, fixing the volume ratio of aggregate to the cereal seed husks to (aggregate/cereal seed husks) = 40/100, further fixing the weight ratio of the hydraulic inorganic materials to the asphalt emulsion to (hydraulic inorganic materials/asphalt emulsion) = 35/100, and changing the weight ratio of the fine aggregate to the coarse aggregate in the aggregate to various levels. Mixing ability, working ability, permeability time by simple test, intrusion volume, GB resistance factor, SB resistance factor, and abrasion weight were tested on these mixtures. The materials used and the test methods were the same as those in Experiment 5. However, #7 crushed stone produced in Kuzuu, Tochigi-ken (volume per gram in dry state: 0.64 cm³) was used as the coarse aggregate. The results are shown in Table 11.

**Table 11**

| Test item | Weight ratio of coarse aggregate to fine aggregate (coarse aggregate/fine aggregate) | | | | | |
|---|---|---|---|---|---|---|
| | 0/40 | 5/35 | 10/30 | 15/25 | 20/20 | 25/15 |
| Mixing ability | Good | Good | Good | Good | Good | Poor |
| Working ability | Good | Good | Good | Good | Good | Poor |
| Permeability time by simple test (sec) | 11 | 9 | 8 | 7 | 6 | 6 |
| Intrusion volume (mm) | 8 | 7 | 4 | 5 | 4 | 4 |
| GB resistance fact | 15 | 14 | 14 | 4 | 13 | 11 |
| SB resistance factor | 6 | 6 | 7 | 6 | 5 | 5 |
| Abrasion weight (g/m²) | 520 | 310 | 190 | 90 | 50 | 40 |

| | | | | | | |
|---|---|---|---|---|---|---|
| (Note 1) Volume ratio of aggregate to cereal seed husks: (aggregate/cereal seed husks) = 40/100 | | | | | | |
| (Note 2) Weight ratio of solid fraction in asphalt emulsion to cereal seed husks: (asphalt solid fraction/cereal seed husks) = 200/100 | | | | | | |
| (Note 3) Weight ratio of hydraulic inorganic material to asphalt emulsion: (hydraulic inorganic material/asphalt emulsion) = 35/100 | | | | | | |
| (Note 4) Test aging days: 14 days | | | | | | |

As is clear from the results shown in Table 11, replacement of a part of the fine aggregate by coarse aggregate leads to a gradual increase in water-permeability and abrasion resistance. When the amount of coarse aggregate exceeds the amount of fine aggregate, bath mixing ability and working ability become poorer. The appropriate amount of the coarse aggregate relative to the fine aggregate is thus known to be the same as the fine aggregate at the largest. From these findings, it is concluded that the ratio of the coarse aggregate to the fine aggregate should preferably be within a range of (coarse aggregate/fine aggregate) = (1/1 to 1/5).

### [Example]

A cold asphalt mixture for elastic pavement of the present invention was prepared by using the same materials as in Experiment 5 except that an artificial asphalt emulsion ("MAIKARAH EMULSION" made by Nichireki Co., Ltd.) was used in place of the asphalt emulsion, and cobalt blue (made by Bayer Company) was used as a coloring pigment. 30 volume parts of aggregate relative to 100 volume parts of cereal seed husks, 16 weight parts of solid content in the artificial asphalt emulsion relative to 100 weight parts of cereal seed husks, and 50 weight parts of hydraulic inorganic material and 4 weight parts of coloring pigment both relative to 100 weight parts of artificial asphalt emulsion were used. The resultant cold asphalt mixture for elastic pavement was satisfactory both in mixing ability and working ability, with a permeability time by simple test of 8 seconds, an intrusion volume of 5 mm, a GB resistance factor of 11, an SB resistance factor of 6, and an abrasion weight of 120 g/m². A pavement structure having a thickness of 5 cm was built within the test site by using the cold asphalt mixture for elastic pavement. The resultant pavement structure was blue clearly expressing the tint of the coloring pigment, and gave an elastic walking sensation. Water sprinkled onto the upper surface was quickly discharged, never producing water pools on the surface of the pavement structure.

As described above, the present invention provides a novel method of utilizing rejected herb aceous plant portions such as cereal seed husks having so far given much difficulty in disposal as wastes. The method of the present invention not only permits mass consumption of rejected herbaceous plant portions such as cereal seed husks by preparing a cold asphalt mixture for elastic pavement through mixing rejected herbaceous plant portions with a cold binder, such as thermosetting polymer and an asphalt emulsion, but also enables to provide an asphalt mixture for elastic pavement low in cost and excellent in water permeability. Since a cold asphalt mixture of the present invention can be used without heating, it never damages rejected herbaceous plant portions through combustion or carbonization, and further, since a cold asphalt mixture of the present invention is free from production of carbon dioxide gas resulting from heating, the mixture is excellent also from the point of view of earth environments. A cold asphalt mixture for elastic pavement of the present invention permitting easy construction and having an excellent water-permeability is an optimum paving material not only for general sidewalks, but also for walkways and promenades in parks and river reservations, and jogging courses. It gives no risk of impairing reflux of rainwater to underground, and execution at any place never exerts adverse effects on trees or groundwater. Further, it is easy to color the mixture, thus providing a mixture for pavement excellent in view. The present invention provides remarkable advantages as an effective utilization of wastes, and an elastic pavement structure more excellent than in the conventional art, giving a very important significance.

## Claims

1. A cold asphalt mixture for an elastic pavement comprising rejected herbaceous plant portions, as a main component material, and a cold binder.

2. A cold asphalt mixture for an elastic pavement according to claim 1, wherein the rejected herbaceous plant portions comprise leaves, stems, roots or seed husks of herbaceous plants.

3. A cold asphalt mixture for an elastic pavement according to claim 2, wherein the seed husks of a herbaceous plant are cereal seed husks.

4. A cold asphalt mixture for an elastic pavement according to any one of claims 1 to 3, wherein said mixture further contains an aggregate.

5. A cold asphalt mixture for an elastic pavement according to any one of claims 1 to 4, wherein the cold binder is a thermosetting polymer or an asphalt emulsion.

6. A cold asphalt mixture for an elastic pavement according to claim 5, wherein the mixing ratio of the thermosetting polymer to the rejected herbaceous plant portions is, in volume ratio, from 10 to 50 volume parts of thermosetting polymer relative to 100 volume parts of the rejected herbaceous plant portions.

7. A cold asphalt mixture for an elastic pavement according to claim 5 or 6, wherein the thermosetting polymer is a polyurethane resin.

8. A cold asphalt mixture for an elastic pavement according to claim 5, wherein the mixing ratio of the asphalt emulsion to the rejected herbaceous plant portions is from 50 to 300 weight parts of asphalt solid fraction in the asphalt emulsion relative to 100 weight parts of the rejected herbaceous plant portions.

9. A cold asphalt mixture for an elastic pavement according to claim 8, wherein the mixing ratio of the aggregate to the rejected herbaceous plant portions is from 10 to 120 volume parts of aggregate relative to 100 volumn parts of the rejected herbaceous plant portions.

10. A cold asphalt mixture for an elastic pavement according to claim 8 or 9, wherein said mixture contains a hydraulic inorganic material.

11. A cold asphalt mixture for an elastic pavement according to any one of claims 1 to 10, wherein said mixture contains one or more auxiliary materials selected from the group consisting of a coloring pigment, rubber, elastomer, sawdust, waste plastic materials, glass chips, wheat straw, corn chips, straw chips, hay, bean shell, branches, leaves and roots of a tree, chips of polyethylene containers and chips for papermaking.

12. An elastic pavement structure having a layer built by the use of the cold asphalt mixture for an elastic pavement according to any one of claims 1 to 11, as a surface layer or a part thereof.

13. An elastic pavement structure according to claim 12 having a layer built by the use of a water-permeable paving mixture under the layer built by the use of the cold asphalt mixture for an elastic pavement according to any one of claims 1 to 11.

14. A method of utilizing rejected herbaceous plant portions serving as a main material of an asphalt mixture for an elastic pavement, by mixing the rejected herbaceous plant portions at least with a cold binder.
